# EUROPEAN PATENT APPLICATION

(11) **EP 2 886 849 A1**
(43) Date of publication of application: **24.06.2015**
(21) Application number: 13306846.0
(22) Date of filing: 23.12.2013
(51) Int. Cl.: F02N 15/02, F16D 41/064

(54) **Torque transmission mechanism**

(71) Applicant: Aktiebolaget SKF, 41 550 Göteborg (SE)
(72) Inventor: Chambonneau, Charles, 37300 JOUE LES TOURS (FR); Berruet, Nicolas, 37260 Artannes sur Indre (FR); Champalou, François, 41150 CHAUMONT SUR LOIRE (FR); Corbett, Richard, 37230 FONDETTES (FR)
(74) Representative: Myon, Gérard Jean-Pierre

(57) **Abstract**

This torque transmission mechanism (A) for an internal combustion engine, adapted to transmit a starting torque from a starter motor to a crankshaft (4) of the internal combustion engine, comprises a ring gear (2) that transmits the starting torque and a one-way clutch (8) disposed between the ring gear (2) and the crankshaft (4). The ring gear (2) comprises a gear side portion (22) to which the starting torque is transmitted from the starter motor via gear mesh. The ring gear (2) comprises a plastic part (20) coupled in rotation to the inner ring (82) of the one-way clutch (8), and the gear side portion (22) is made of a metallic material.

## Description

The invention relates to a torque transmission mechanism for an internal combustion engine.

Torque transmission mechanisms for starter motors of internal combustion engines generally comprise a ring gear to which a starting torque is transmitted by a starter motor, and which transmits torque to a one-way clutch of the torque transmission mechanism. The ring gear is generally made from a metallic material. The ring gear generally comprises a gear side region which must be welded to an intermediate region. Moreover, the ring gear must generally be welded to the inner ring of the one way clutch. The ring gear is therefore complex to manufacture and to assemble. Moreover, as the ring gear is made of a metallic material, its weight is relatively high.

The aim of the invention is to provide a new torque transmission mechanism in which the ring gear is lighter and needs less complex operations to assemble.

To this end, the invention concerns a torque transmission mechanism for an internal combustion engine, adapted to transmit a starting torque from a starter motor to a crankshaft of the internal combustion engine, the torque transmission mechanism comprising a ring gear that transmits the starting torque and a one-way clutch disposed between the ring gear and the crankshaft, said ring gear comprising a gear side portion to which the starting torque is transmitted from the starter motor via gear mesh, wherein the ring gear comprises a plastic part coupled in rotation to the inner ring of the one-way clutch, and wherein the gear side portion is made of a metallic material.

Thanks to the invention, the ring gear of the torque transmission mechanism is lighter than ring gears of the prior art and its manufacturing and assembly operations are simpler.

According to further aspects of the invention which are advantageous but not compulsory, such a torque transmission mechanism may incorporate one or several of the following features:
- The plastic part of the ring gear is over-moulded on the inner ring of the one-way clutch and on the gear side portion.
- The plastic part is made of PA 6.6 or PA 4.6.
- The plastic part is made of a composite material.
- The plastic material of which the plastic part is made is reinforced with fibres, such as carbon fibres or glass fibres.
- The surfaces of the inner ring of the one-way clutch on which the plastic part is over-moulded are knurled.
- The depth of the knurling is comprised between 0,3 and 0,7 millimetres.
- The ring gear comprises an outer surface covered with an anti-friction material, whereas a sealing element adapted to seal a space between the ring gear and a casing includes a lip which rests on said surface.
- The surface on which rests the lip of the sealing element is realised on a metallic part belonging to the ring gear and on which the plastic part is over-moulded.
- The torque transmission mechanism comprises a bearing, for allowing rotation of the ring gear with respect to the crankshaft, whereas the outer ring of the bearing is formed by a metallic part and on which the plastic part is over-moulded.
- The gear side portion is a ring-shaped part having a circular inner edge.
- The gear side portion is a metallic insert whose inner edge is homothetic to the outer shape of the gear teeth the of ring gear.
- The plastic part comprises a reinforcing insert.
- The reinforcing insert is made of a metallic material.
- The reinforcing insert comprises shapes adapted to improve the mechanical link between the reinforcing insert and the plastic material of the plastic part.

The invention will now be explained in correspondence with the annexed figures, as an illustrative example. In the annexed figures:
- figure 1 is a sectional view of an upper half of a torque transmission mechanism according to a first embodiment of the invention,
- figure 2 is a perspective view of a portion of an inner ring of a one-way clutch belonging to the torque transmission mechanism of figure 1,
- figure 3 is a sectional view similar to figure 1, at a larger scale, of a portion of a ring gear belonging to a torque transmission mechanism according to a second embodiment of the invention,
- figure 4 is a sectional view of a portion of a ring gear belonging to a torque transmission mechanism according to a third embodiment of the invention, said sectional view being taken along the torque transmission mechanism along a line similar to line IV-IV on figure 1.
- figure 5 is a sectional view similar to figure 1, of an upper half of a torque transmission mechanism according to a fourth embodiment of the invention.
- figure 6 is front view along arrow VI of the torque transmission mechanism of figure 5.

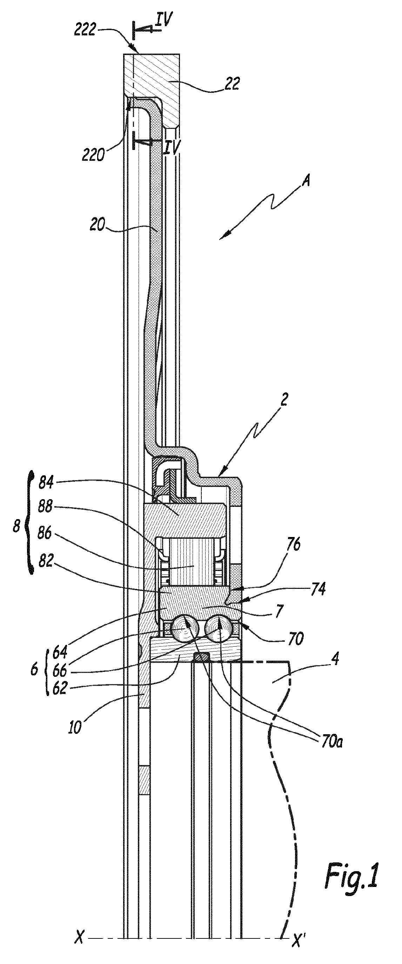

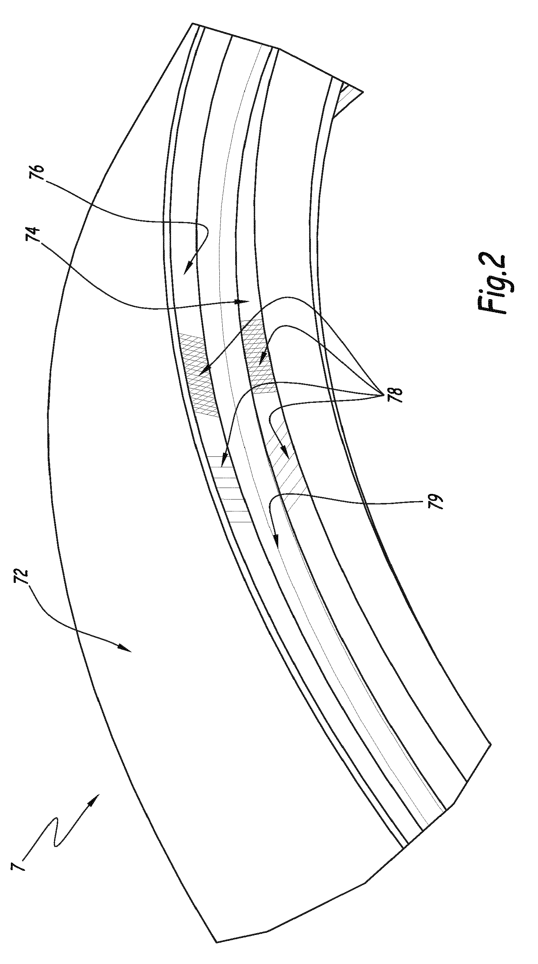

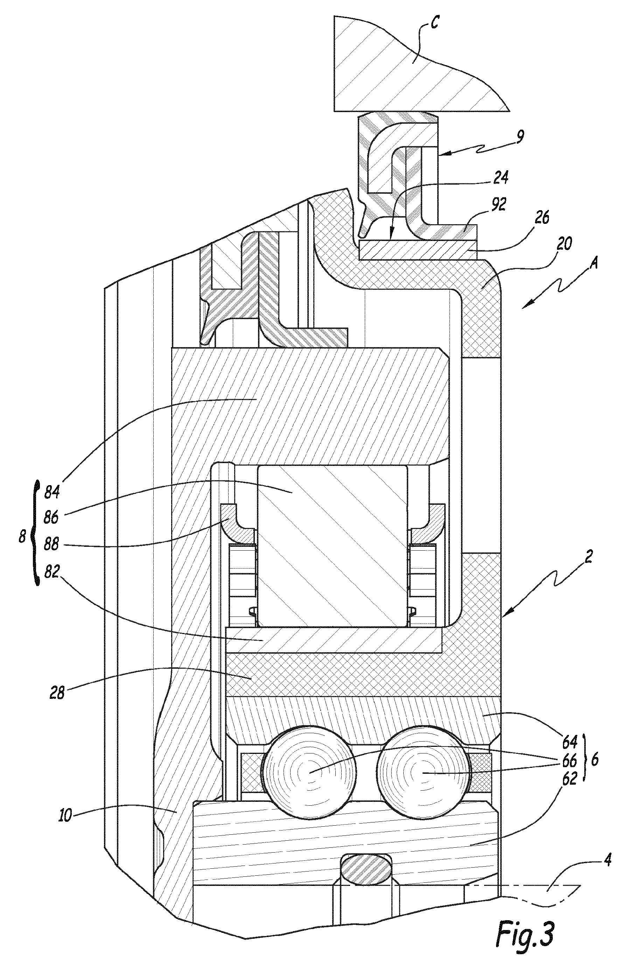

The torque transmission mechanism A represented on figures 1 and 2 comprises a ring gear 2 which is driven by a non-shown pinion of a non-shown starter motor. Ring gear 2 is rotatable with respect to a crankshaft 4 of a non-shown internal combustion engine around a rotation axis X-X' of torque transmission mechanism A. For the sake of simplicity and clarity, crankshaft 4 is shown only on figures 1 and 3 in dashed lines.

In this description, the terms "axial", "radial", "axially", "radially" refer to axis X-X'. A direction is axial when it is parallel to axis X-X' and radial when it is perpendicular to axis X-X' and secant with this axis. A surface is axial when it is perpendicular to axis X-X' and radial when this surface belongs to a cylinder that surrounds axis X-X' at a constant radial distance.

Rotation of ring gear 2 with respect to crankshaft 4 is allowed by a rolling bearing 6 including an inner ring 62 coupled in rotation to crankshaft 4, and an outer ring 64. The outer ring 64 includes two raceway tracks 70a realized on an inner radial surface 70 of a tubular part 7, which forms outer ring 64 and is coupled in rotation with ring gear 2. Rolling bearing 6 also includes rolling elements, such as balls 66, located between inner ring 62 and raceway tracks 70a.

Torque transmission mechanism A also comprises a one-way clutch 8, which includes an inner ring 82 formed also formed by tubular part 7, an outer ring 84 and sprags 86 mounted in a cage 88 located between inner ring 82 and outer surface 72.

Actually, tubular 7, which is monolithic, forms outer ring 64 of rolling bearing 6 via its inner radial surface 70 and inner ring 82 of one-way clutch 8 via its outer radial surface 72.

Tubular part 7 is coupled in rotation with ring gear 2, so that the starting torque delivered by the starter motor is transmitted to tubular part 7 via ring gear 2. Outer ring 84 is coupled in rotation with crankshaft 4 thanks to a front plate 10 which forms a single piece with outer ring 84. According to a non-shown variant, front plate 10 and outer ring 84 may be formed by two separate parts.

Ring gear 2 comprises a plastic part 20, and a gear side portion 22 which is made of a metallic material and to which a starting torque is transmitted from the starter motor via gear mesh. The plastic part 20 is over-moulded on tubular portion 7 and extends substantially radially between tubular portion 7 and gear side portion 22.

Gear side portion 22 has the shape of a ring including an inner circular edge 220 and gear teeth 222 on its outer edge.

Plastic part 20 may be made of a plastic material such as PA 6.6 or PA 4.6. Alternatively, the plastic material may be a composite material reinforced with fibres, such as carbon fibres or glass fibres in order to more efficiently transmit the starting torque. In a variant, the plastic material may be a polymer material with glass fibres, such as thermoplastic material.

The use of a plastic material allows larger geometrical tolerances between the outer ring 64 of bearing 6 and gear teeth 222.

Ring gear 2 is over-moulded on two surfaces 74 and 76 of tubular part 7. Surface 76 is a radial surface centred on rotation axis X-X'. Surface 74 is an axial surface perpendicular to rotation axis X-X'. Surfaces 74 and 76 comprise knurlings 78 which permit that plastic material of plastic part 20 is firmly attached to the metallic material of tubular part 7. Between surfaces 74 and 76, tubular part 7 comprises a recess 79 in which plastic material of plastic part 20 extends.

Advantageously, the knurlings 78 of surfaces 74 and 76 have a depth comprised between 0,3 and 0,7 mm.

As represented on figure 2, knurlings 78 may be realized in limited angular sectors of surfaces 74 and 76 and distributed on the circumference of surfaces 74 and 76.

In a non-shown variant, knurlings 78 may extend on the whole circumference of surfaces 74 and 76.

Advantageously, inner circular side 220 of gear side portion 22 may also be knurled in the same way as surfaces 74 and 76.

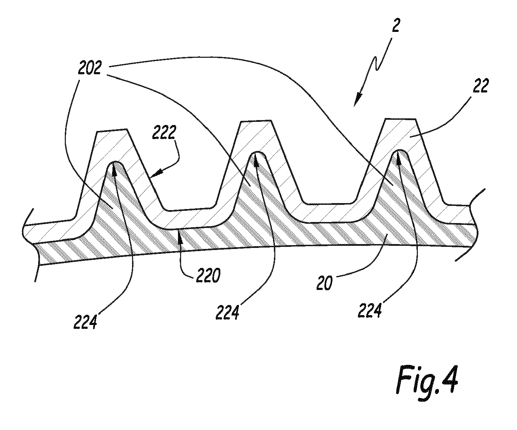

A second and a third embodiment of the invention are represented on figures 3 and 4. In these embodiments, elements similar to the first embodiment have the same references and work in the same way. Only the differences with the first embodiment are detailed here-after.

In the second embodiment of figure 3, rolling bearing 6 comprises an outer ring 64, which is a metallic part distinct from the inner ring 82 of one-way clutch 8, on which ring gear 2 is over moulded. In such a case, the inner ring of one way clutch 8 is formed by a tubular metallic part 82 on which plastic part 20 is over-moulded. Plastic part 20 comprises an annular portion 28, which is radially delimited by outer ring 64 of bearing 6 and inner ring 82 of one-way clutch 8.

According to a feature which is represented only on figure 3 but which can be combined with the embodiment of figures 1 and 2, ring gear 2 comprises a radial outer surface 24 covered with an antifriction material. Surface 24 permits the mounting of a sealing element 9 adapted to seal a space between the ring gear 2 and a casing C of the internal combustion engine. Sealing element 9 comprises a sealing lip 92 which rests in a sealing manner on surface 24. Surface 24 is formed on a tubular metallic part 26 belonging to ring gear 2 and on which plastic part 20 is over-moulded.

A third embodiment of the invention is represented on figure 4. In this embodiment, gear side portion 22 is formed by a metallic insert whose inner edge 220 is homothetic to the outer shape of gear teeth 222 and on which plastic part 20 is over moulded. In other words, plastic part 20 comprises teeth 202, which are received in corresponding recesses 224 of gear side portion 22.

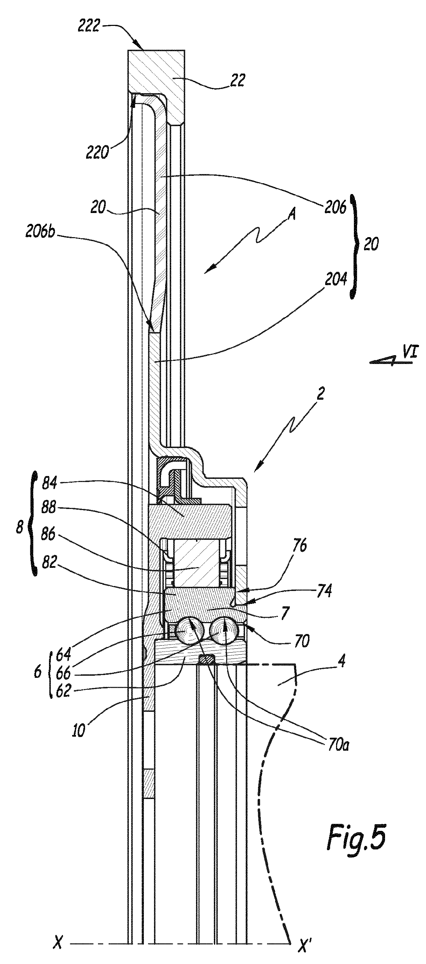

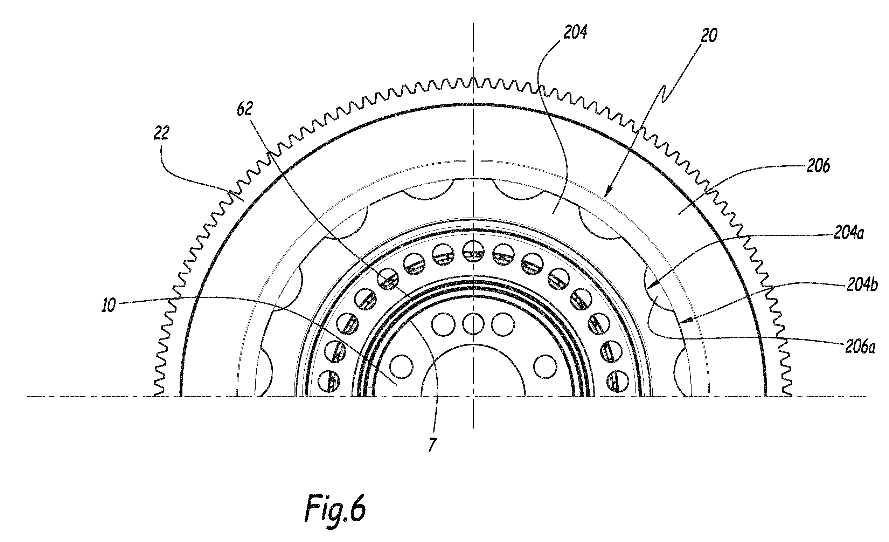

A fourth embodiment of the invention is represented on figures 5 and 6. In this embodiment, plastic part 20 comprises a reinforcement insert 204, which is preferably made of a metallic material. As represented on figure 5, reinforcement insert 204 may be in contact with inner ring 82. In a non-shown variant, insert 204 may be in contact with gear side portion 22. In another non-shown variant, insert 204 may be in contact with neither of gear side portion 22 and inner ring 82 and simply be comprised in plastic part 20. For example, insert 204 may be over moulded in plastic part 20.

As represented on figure 6, reinforcement insert 204 may comprise shapes adapted to improve the mechanical link between insert 204 and the plastic material 206 of plastic part 20. Such shapes may comprise circular cut-outs 204a on the outer circumference 204b of insert 204, which cooperate with corresponding protrusions 206a of plastic material 206.

In a non-shown variant, insert 204 may comprise holes filled with plastic material 206 coming from both sides of the holes, so that a bond of plastic material is formed between insert 204 and plastic material 206.

The technical features of the embodiments and variants previously described can be combined to form new embodiments within the scope of the invention.

## Claims

1. Torque transmission mechanism (A) for an internal combustion engine, adapted to transmit a starting torque from a starter motor to a crankshaft (4) of the internal combustion engine, the torque transmission (A) mechanism comprising a ring gear (2) that transmits the starting torque and a one-way clutch (8) disposed between the ring gear (2) and the crankshaft (4), said ring gear (2) comprising a gear side portion (22) to which the starting torque is transmitted from the starter motor via gear mesh, wherein the ring gear (2) comprises a plastic part (20) coupled in rotation to the inner ring (82) of the one-way clutch (8), and wherein the gear side portion (22) is made of a metallic material.

2. Torque transmission mechanism according to claim 1, wherein the plastic part (20) of the ring gear (2) is over-moulded on the inner ring (82) of the one-way clutch (8) and on the gear side portion (22).

3. Torque transmission mechanism according to any preceding claim, wherein the plastic part (20) is made of PA 6.6 or PA 4.6.

4. Torque transmission mechanism according to any of claims 1 and 2, wherein the plastic part (20) is made of a composite material.

5. Torque transmission mechanism according to claim 4, wherein the plastic material of which the plastic part (20) is made is reinforced with fibres, such as carbon fibres or glass fibres.

6. Torque transmission mechanism according to any preceding claim, wherein the surfaces (74, 76) of the inner ring (82) of the one-way clutch (8) on which the plastic part (20) is over-moulded are knurled (78).

7. Torque transmission mechanism according to claim 6, wherein the depth of the knurling (78) is comprised between 0,3 and 0,7 millimetres.

8. Torque transmission mechanism according to any preceding claim, wherein the ring gear (2) comprises an outer surface (24) covered with an anti-friction material, and wherein a sealing element (9) adapted to seal a space between the ring gear (2) and a casing (C) includes a lip (92) which rests on said surface (24).

9. Torque transmission mechanism according to claim 8, wherein the surface (24) on which rests the lip (92) of the sealing element (9) is realised on a metallic part (26) belonging to the ring gear (2) and on which the plastic part (20) is over-moulded.

10. Torque transmission mechanism according to any preceding claim, wherein it comprises a bearing (6), for allowing rotation of the ring gear (2) with respect to the crankshaft (4), and wherein the outer ring (64) of the bearing (6) is formed by a metallic part (7) on which the plastic part (20) is over-moulded.

11. Torque transmission mechanism according to any preceding claim, wherein the gear side portion (22) is a ring-shaped part having a circular inner edge (220).

12. Torque transmission mechanism according to any of claims 1 to 10, wherein the gear side portion (22) is a metallic insert whose inner edge (220) is homothetic to the outer shape of the gear teeth (222) of the of ring gear (2).

13. Torque transmission mechanism according to any preceding claim, wherein the plastic part (20) comprises a reinforcing insert (204).

14. Torque transmission mechanism according to claim 13, wherein the reinforcing insert (204) is made of a metallic material.

15. Torque transmission mechanism according to any of claims 13 and 14, wherein the reinforcing insert (204) comprises shapes (204a) adapted to improve the mechanical link between the reinforcing insert (204) and the plastic material (206) of the plastic part (20).
